# NEUE EUROPÄISCHE PATENTSCHRIFT

(11) **EP 1 368 227 B2**
(45) Veröffentlichungstag und Bekanntmachung des Hinweises auf die Entscheidung über den Einspruch: **12.12.2012**
(45) Hinweis auf die Patenterteilung: 21.12.2005
(21) Anmeldenummer: 02724226.2
(22) Anmeldetag: 12.03.2002
(51) Int. Cl.: B63H 21/20, B63H 5/10, B63H 23/24, B63J 3/02

(54) **ANTRIEBSANLAGE FÜR MARITIME OBJEKTE**
PROPULSION SYSTEM FOR MARITIME CRAFT
INSTALLATION DE PROPULSION DESTINEE A DES OBJETS MARITIMES

(30) Priorität: 13.03.2001 DE 10111910
(43) Veröffentlichungstag der Anmeldung: 10.12.2003
(73) Patentinhaber: MAN DIESEL & TURBO, FILIAL AF MAN DIESEL & TURBO SE, TYSKLAND, 2450 Copenhagen SV (DK)
(72) Erfinder: GALLIN, Constantin, M., 76530 Baden-Baden (DE); NIELSEN, Jens, Ring, DK-9900 Frederikshavn (DK); MOLLER, Erik, DK-9300 Saeby (DK)
(74) Vertreter: Munk, Ludwig
(86) Internationale Anmeldenummer: PCT/EP2002/002705
(87) Internationale Veröffentlichungsnummer: WO 2002/072418

(56) Entgegenhaltungen:
- EP-A- 0 117 881
- DE-A- 4 441 604
- DE-C- 4 340 747
- 'Society of Naval Architects and Marine Engineers, 1996, vol. 104, pp. 21 9-238; "Comparisonof propulsion plants for ultra large container ships of tomorrow"; Gall in, C.M., Faber, E.C., Kondraki, A., Bush, I.'
- '"Schiffsantriebessysteme mit gegenläuffigen Propellern und unabhängigen Energiequellen"; Gallin, C., Paetow, K.H., Beek, T.van, Dierich, H.; Jahrbuch der Schiffbautechnischen Gesellschaft, vol. 89, pp.451-470, Hamburg, November 1995.'
- '"Schiffantriebessysteme mit gegenläufigen Propellern und unabhängigen Energiequellen" von K.-H. Paetow, C. Gallin, T.van Beek, H.Dierich, Paper presented at the 90' Annual Meeting 20-25 Nov. 1995 in Hamburg of the STG (Schiffbau Technische Gesellschaft).'
- 'Van Beek, T., De Jong, H.; "Advanced Propulsion through Contra Rotating Propellers"; IMDC 94 konferenz und STG-Sommertagung, Delft, Mai 1994.'

## Beschreibung

Die Erfindung betrifft eine Antriebsanlage für maritime Objekte, insbesondere Schiffe.

Die DE 44 41 604 C2 welche als nächstliegender Stand der Technik betrachtet wird, zeigt eine Propulsionsanlage für Schiffe mit zwei koaxial hintereinander angeordneten, gegenläufig rotierenden Propellern, von denen der eine von einem Verbrennungsmotor und der andere von einem Elektromotor angetrieben werden. Der Elektromotor wird hier ausschließlich durch die an Bord befindlichen Hilfsaggregate mit Strom gespeist. Ein zusätzlich vom Verbrennungsmotor antreibbarer Wellengenerator ist nicht vorgesehen. Diese bekannte Anordnung erweist sich daher als nicht vielseitig genug. Insbesondere ist der elektrisch angetriebene Propeller hier nicht einsetzbar, wenn die Hilfsaggregate wegen anderweitigen Bedarfs keinen Strom an den zugeordneten Elektromotor abgeben können.

Die CH 667 627 A5 zeigt eine Antriebsanlage für Schiffe mit zwei parallel nebeneinander angeordneten Propellern, die mittels eines jeweils zugeordneten Dieselmotors antreibbar sind, der in Serie mit einem Elektromotor angeordnet ist, der von der Leistungsreserve des elektrischen Bordnetzes mit Strom gespeist werden kann und der bei nicht benötigter zusätzlicher Leistung als vom Hauptmotor antreibbarer Wellengenerator fungiert, der Strom an das Bordnetz abgibt. Die Funktion eines zusätzlich vom Hauptmotor angetriebenen Wellengenerators ist hier nur gegeben, solange der Elektromotor Strom in das Bordnetz einspeist. Für eine Antriebsanlage mit zwei koaxial hintereinander angeordneten Propellern ist diese bekannte Anordnung nicht geeignet.

Die EP 0 117 881 B1 zeigt eine Propulsionsanlage für Schiffe mit zwei hintereinander angeordneten Propellern, von denen der eine von einer Brennkraftmaschine und der andere von einem Elektromotor angetrieben werden, der alternativ von einem von der Brennkraftmaschine zusätzlich angetriebenen Wellengenerator oder vom elektrischen Bordnetz mit Strom gespeist werden kann. Der von der Brennkraftmaschine angetriebene Propeller ist hier der vordere Propeller. Der hintere, elektrisch angetriebene Propeller ist in ein Ruder eingebaut. Eine gemeinsame Stromversorgung des Elektromotors durch das Bordnetz und den Wellengenerator ist hier nicht vorgesehen. Auch diese bekannte Anordnung erweist sich daher als nicht vielseitig genug, was sich ungünstig auf die erzielbare Gesamtwirtschaftlichkeit auswirkt.

Hiervon ausgehend ist es daher die Aufgabe der vorliegenden Erfindung, eine Antriebsanlage für maritime Objekte, wie Schiffe etc., zu schaffen, die nicht nur eine hohe, über die maximale Dauerleistung der Brennkraftmaschine hinausgehende Spitzenleistung ermöglicht, sondern auch insgesamt eine hohe Anpassungsfähigkeit in der Leistung an die Bedürfnisse des Einzelfalls unter Berücksichtigung der Sicherheit und Wirtschaftlichkeit gewährleistet und die dennoch einfach und kostengünstig aufgebaut ist.

Diese Aufgabe wird durch die dem Anspruch 1 zugrundeliegende Kombination gelöst.

Hierdurch kommt eine Antriebsanlage für maritime Objekte, insbesondere Schiffe, zum Vorschlag, die mit wenigstens einem Paar von zwei koaxial hintereinander angeordneten, gegenläufigen, gleichzeitig oder alternativ antreibbaren Propellern versehen ist, die jeweils auf einer zugeordneten Welle aufgenommen sind, wobei die dem vorderen Propeller zugeordnete Welle als von der dem hinteren Propeller zugeordneten Welle durchgriffene Hohlwelle ausgebildet ist und wobei die dem hinteren Propeller zugeordnete Welle mittels wenigstens einer an Bord vorhandenen Hauptbrennkraftmaschine und die dem vorderen Propeller zugeordnete Welle mittels wenigstens eines zugeordneten Elektromotors antreibbar sind, der wahlweise von einem von der Hauptbrennkraftmaschine zusätzlich antreibbaren Wellengenerator und/oder von an Bord befindlichen Hilfsaggregaten mit Strom versorgbar ist, wobei die Gesamtvorschubleistung bei gleichzeitig mit der Hauptbrennkraftmschine aktivierten Hilfsaggregaten größer als die von der Hauptbrennkraftmaschine maximal erzeugbare Vorschubleistung ist.

Diese Maßnahmen ergeben in vorteilhafter Weise eine hybride, aus einem brennkraftmechanischen und einem elektromechanischen Teil bestehende Antriebsanlage, die in vorteilhafter Weise praktisch vollständig aus bekannten und in der Praxis bewährten Komponenten zusammen gestellt werden kann. Die erfindungsgemäße Antriebsanlage nutzt in vorteilhafter Weise auch die Vorteile der koaxialen, gegenläufigen Doppelpropelleranordnung, die nicht nur bei einem Antrieb beider Propeller, sondern auch schon bei einem Antrieb nur des hinteren Propellers einen hohen hydrodynamischen Gesamtwirkungsgrad ergibt. Bei einem Antrieb beider Propeller ergibt sich eine besonders hohe Wirkungsgradsteigerung, welche die bei der Umwandlung mechanischer Energie in elektrische Energie und umgekehrt nicht vermeidbaren Verluste bei weitem ausgleicht. Die erfindungsgemäße Antriebsanlage ermöglicht in vorteilhafter Weise eine Reihe von Betriebsarten mit einer jeweils optimalen Antriebsleistung. So kann mit beiden Propellern oder nur mit dem hinteren Propeller oder nur mit dem vorderen Propeller gefahren werden. Ebenso kann mit der Hauptbrennkraftmaschine und den Hilfsaggregaten oder nur mit der Hauptbrennkraftmaschine oder nur mit den Hilfsaggregaten gefahren werden. Es lässt sich daher in vorteilhafter Weise eine hohe Anpassungsfähigkeit in der Leistung nicht nur im oberen, sondern auch im unteren Leistungsbereich und damit insgesamt eine hohe Wirtschaftlichkeit und Redundanz erreichen.

Sofern beide Propeller angetrieben werden und neben der Hauptbrennkraftmaschine auch die an Bord vorhandene Leistungsreserve in Form der Hilfsaggregate zum Einsatz kommen, ergibt sich ein sogenannter Booster-Betrieb mit einer gegenüber dem Normalbetrieb erheblichen Steigerung der erreichbaren Fahrtgeschwindigkeit, was einem hiermit ausgestatteten Schiff etc. eine hohe Zuverlässigkeit verleiht und insbesondere auch noch Jahre nach dem Bau des Schiffes etc. eine Anpassung seiner Leistungsfähigkeit an dann u.U. höhere Anforderungen ermöglicht. Infolge des bei der erfindungsgemäßen Anordnung vorgesehenen Wellengenerators kann hier in vorteilhafter Weise der Leistungsanteil des elektromechanischen Teils der hybriden Antriebsanlage über die an Bord vorhandene Leistungsreserve hinaus, d. h. über die Leistung der Hilfsaggregate hinaus gesteigert werden, wodurch das Verhältnis der Propellerleistungen optimiert und damit insgesamt ein ausgezeichneter Gesamtwirkungsgrad erreicht werden können. Bei Normalbetrieb, wenn die an Bord vorhandene Leistungsreserve nicht benötigt wird, können infolge des von der Hauptbrennkraftmaschine zusätzlich angetriebenen Wellengenerators in vorteilhafter Weise ebenfalls beide Propeller angetrieben und damit der hohe hydrodynamische Gesamtwirkungsgrad der Doppelpropelleranordnung genutzt werden. Die bei diesem Betriebsfall ausschließlich benutzte Hauptbrennkraftmaschine kann in der Regel preisgünstiges Schweröl verbrennen und ist zudem sparsam im Verbrauch. Trotz des Antriebs beider Propeller werden hier die Hilfsaggregate nicht benötigt, was diese Aggregate schont und Kosten spart. Sofern nicht die volle Leistung der Hauptbrennkraftmaschine als Antriebsleistung benötigt wird, kann der Elektromotor einfach auf Leerlauf gestellt werden, so dass der vordere Propeller frei durchdrehen kann, wodurch sich ein ganz normaler Einpropeller-Antrieb ergibt. Der frei drehende, vordere Propeller verursacht dabei, wie Versuche gezeigt haben, praktisch keine Verluste. Ebenso kann der Wellengenerator abgeschaltet oder als Stromlieferant für das Bordnetz benutzt werden. Für sehr langsame Fahrt oder Notbetrieb kann nur mit dem vorderen Propeller gefahren werden, wobei die elektrische Leistung ausschließlich vom Bordstromnetz, d.h. von den Hilfsaggregaten kommen kann. Die Hauptbrennkraftmaschine, die im unteren Leistungsbereich einen sehr schlechten Wirkungsgrad hätte, wird hierbei in vorteilhafter Weise nicht benötigt. Die erfindungsgemäße Anordnung erweist sich somit ersichtlich als sehr vielseitig und wirtschaftlich.

Vorteilhafte Ausgestaltungen und zweckmäßige Fortbildungen der übergeordneten Maßnahmen sind in den Unteransprüchen angegeben. So kann der hintere Propeller vorteilhaft als verstellbare Flügel aufweisender Verstellpropeller ausgebildet sein. Dies ermöglicht in jedem Fall eine optimale Flügelstellung und damit einen optimalen Gesamtwirkungsgrad der vorgesehenen Doppelpropelleranordnung. Durch Veränderung der Flügelstellung des hinteren Propellers lässt sich nicht nur eine Überlastung der Hauptbrennkraftmaschine verhindern, sondern auch die Drehzahl praktisch konstant halten, so dass sichergestellt ist, dass der Wellengenerator keine Frequenzschwankungen erzeugen und auf das Bordnetz übertragen kann, so dass aufwendige Gegenmaßnahmen in Form von Thyristoranordnungen etc. entbehrlich sind.

Eine weitere erfindungsgemäße Maßnahme besteht darin, dass der hintere Propeller einen größeren Durchmesser aufweist als der vordere Propeller. Hierdurch ist sicher gestellt, dass die Leistungsvereilung auf die beiden Propeller günstig gewählt werden kann und dass der vom vorderen Propeller erzeugte Drallkegel den hinteren Propeller voll erreicht, so dass auch ein besonders hoher hydrodynamischer Gesamtwirkungsgrad der koaxialen gegenläufigen. Doppelpropelleranordnung gewährleistet ist.

Zweckmäßig kann die erfindungsgemäße Antriebsanlage so ausgelegt sein, dass die Drehzahl des vorderen, als Festpropeller ausgebildeten Propellers höchstens 70%, vorzugsweise 50 - 60% der Drehzahl des hinteren Propellers beträgt. Dies ermöglicht die Wahl einer tragbaren Steigung der Flügel des vorderen Propellers, was für einen guten hydrodynamischen Wirkungsgrad vorteilhaft ist. Zweckmäßig ist dem Elektromotor hierzu ein geeignetes Untersetzungsgetriebe nachgeordnet.

Vorteilhaft kann zwischen dem Elektromotor und dem nachgeordneten Untersetzungsgetriebe eine elastische, vorzugsweise als hydrodynamische Kupplung ausgebildete Kupplung angeordnet sein. Diese Maßnahme ergibt eine stoßabsorbierende Wirkung, was einer Fortpflanzung von am vorderen Propeller entstehenden Drehmomentschwankungen und Drehschwingungen über die Propellerwelle bis zum Elektromotor und damit hierdurch verursachten Störungen, die sich auch im elektrischen Bordnetz negativ auswirken können, entgegenwirkt. Die Verwendung einer hydrodynamischen Kupplung, die eine Flüssigkeitsfüllung enthält, hat den zusätzlichen Vorteil, dass diese Kupplung zur Vermeidung einer Drehmomentübertragung einfach entleert werden kann. Hierdurch ist sichergestellt, dass der Elektromotor bei leerlaufendem vorderem Propeller nicht mitgezogen wird, sondern einfach abgekuppelt werden kann.

Eine weitere, besonders vorteilhafte Maßnahme besteht darin, dass die Welle des hinteren Propellers mittels einer Schaltkupplung vom Hauptmotor abkuppelbar ist. Hierdurch ist ein frei drehender Betrieb des hinteren Propellers einstellbar. Dies ermöglicht eine besonders günstige Stillsetzung der Hauptbrennkraftmaschine. Der Antrieb kann hier nur mit dem vorderen Propeller unter Heranziehung der Hilfsaggregate bewerkstelligt werden. Dies ergibt eine hohe Sicherheit bei Ausfall der Hauptbrennkraftmaschine und erweist sich auch dort als Kosten sparend, wo verlangt wird, dass während der Überholung der Hauptbrennkraftmaschine in einem Hafen Fahrbereitschaft bestehen muss, was z.B. bei Öltankern der Fall ist. Die in diesem Zusammenhang bisher benötigte Bereitstellung eines Schleppers kann hier entfallen.

Zweckmäßig kann die dem hinteren Propeller zugeordnete Welle mit einer über den Propeller hinausgehenden Verlängerung in einem Traglager gelagert sein, das in einem zugeordneten, am Rumpf des maritimen Objekts angebrachten Wellenbock oder bei Anordnungen mit Halbschweberuder vorzugsweise im dem benachbarten Ruder zugeordneten Ruderhorn aufgenommen ist. Hierdurch wird eine hohe Schwingungsstabilität gewährleistet. Außerdem ist eine einfache und gut zugängliche Bauweise des Traglagers sichergestellt. Die Integration des hinteren Traglagers in das dem benachbarten Ruder zugeordnete Ruderhorn erübrigt einen zusätzlichen Wellenbock und ergibt günstigere Strömungsverhältnisse sowie eine besonders einfache und kostsparende Bauweise. Ein weiterer, besonderer Vorteil ist darin zu sehen, dass die dem hinteren, als Verstell-propeller ausgebildeten Propeller zugeordneten Ölversorgungsleitungen und dergleichen im Ruderhorn untergebracht sein können.

Eine weitere vorteilhafte Maßnahme zur Erzielung günstiger Strömungsverhältnisse kann darin bestehen, dass dem hinteren Ende der dem hinteren Propeller zugeordneten Propellerwelle ein laminar umströmbarer Strömungsleiterkörper bzw. eine entsprechende Leitkontur des Ruderhorns zugeordnet ist. Ebenso kann zwischen den Naben der beiden Propeller ein Strömungsleitkörper vorgesehen sein.

Eine weitere, besonders zu bevorzugende Fortbildung der übergeordneten Maßnahmen kann darin bestehen, dass bei Aktivierung der Hilfsaggregate zur Unterstützung der Hauptbrennkraftamaschine die Leistungsaufnahme des von der Hauptbrennkraftmaschine zusätzlich antreibbaren Wellengenerators so gesteuert wird, dass der Wellengenerator nur so viel Leistung aufnimmt, wie zusätzlich zur Leistung der Hilfsaggregate für ein optimales Verhältnis zwischen den Antriebswirkungen der beiden Propeller benötigt wird. Diese Maßnahmen ergeben daher in vorteilhafter Weise eine Optimierung des Gesamtwirkungsgrads der koaxialen, gegenläufigen Doppelpropelleranordnung und eine Minimierung der durch die Energieverluste, die bei der Umwandlung von mechanischer Energie in elektrische Energie und umgekehrt nicht vermeidbar sind, verursachten Leistungsverluste und damit insgesamt einen ausgezeichneten Gesamtwirkungsgrad.

Zweckmäßig ist die vom Wellengenerator aufnehmbare Leistung auf höchstens 20 - 30 %, vorzugsweise 25 %, der maximalen Dauerleistung der Hauptbrennkraftmaschiner beschränkt. Bei Einhaltung dieser Grenze ist der aus der Wirkungsgradsteigerung der Doppelpropelleranordnung resultierende Gewinn in jeden Fall größer als der aus der Energieumwandlung resultierende Verlust. Der Gewinn bezieht sich auf die volle maximale Dauerleistung, der Verlust nur auf den oben genannten, vom Wellengenerator aufgenommenen Teil der genannten Dauerleistung. Auch der Investitionsaufwand für den elektromechanischen Teil der erfindungsgemäßen Antriebsanlage bleibt hierdurch in vorteilhafter Weise in Grenzen.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Fig. 1: eine schematishe Darstellung einer hybriden Schiffsantriebsanlage mit einem langsam laufenden Zweitakt-Großdieselmotor als Hauptmotor,
- Fig. 2: eine schematische Darstellung einer hybriden Schiffsantriebsanlage mit einem schneller laufenden Viertakt-Großdieselmotor als Hauptmotor,
- Fig. 3: ein Beispiel für eine von der Ausführung gemäß Figuren 1 und 2 abweichende Traglageranordnung mit Wellenbock,
- Fig. 4: eine rückwärtige Ansicht der Anordnung gemäß Figur 3 und

- Fig.5: eine Variante zu Figur 3 bei einer Anordnung mit Halb-Schweberuder.

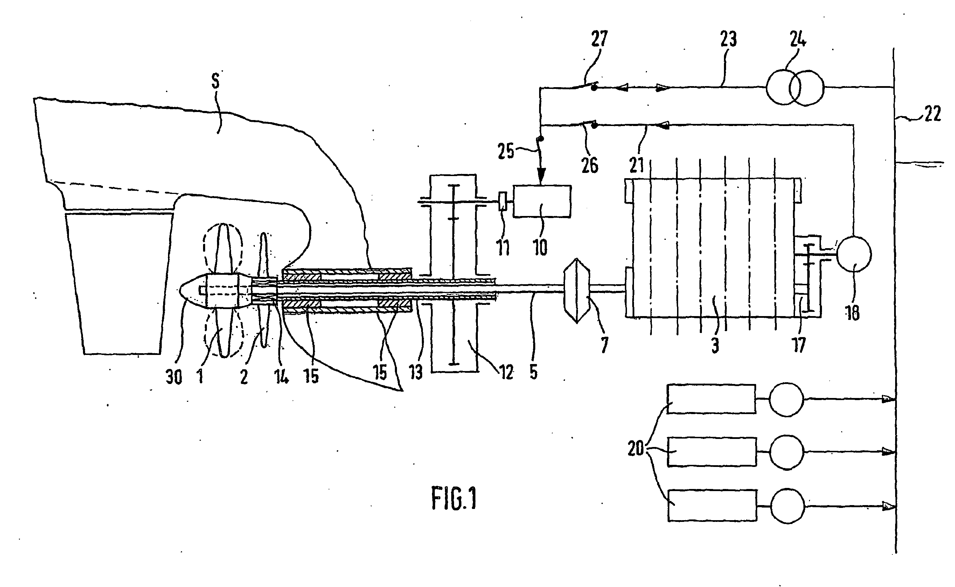

In den Figuren 1 bis 4 ist ein Schiff S angedeutet, das mit einer einen dieselmechanischen und einen elektromechanischen Teil enthaltenden, hybriden Antriebsanlage ausgestattet ist. Diese enthält zwei in Fahrtrichtung koaxial hintereinander angeordnete, gegenläufige Propeller 1, 2. Diese können gleiche oder verschiedene Durchmesser aufweisen. In den dargestellten Beispielen besitzt der hintere Propeller 1 einen größeren Durchmesser als der vordere Propeller 2, wodurch eine optimale Leistungsverteilung auf die beiden Propeller 1, 2 möglich ist und sichergestellt wird, dass der hintere Propeller 1 den vom vorderen Propeller 2 erzeugten Drallkegel praktisch voll ausnutzen kann, was sich vorteilhaft auf die Erzielung eines guten Propellerwirkungsgrads auswirkt.

In einfachen Fällen können beide Propeller 1, 2 als sogenannte Festpropeller ausgebildet sein. Im dargestellten Beispiel ist lediglich der vordere Propeller 2 als mit fest angeordneten Flügeln versehener Festpropeller ausgebildet. Der hintere Propeller 1 ist als mit verstellbaren Flügeln versehener Verstellpropeller ausgebildet. Auf dieser Weise ist es möglich, die Flügelsteigung des hinteren Propellers 1 so zu verändern, dass die Drehzahl konstant gehalten wird und der hintere Propeller 1 in keinem Fall zu schwer dreht, was sich vorteilhaft auf die Vermeidung einer Überlastung der Antriebsmaschine auswirkt.

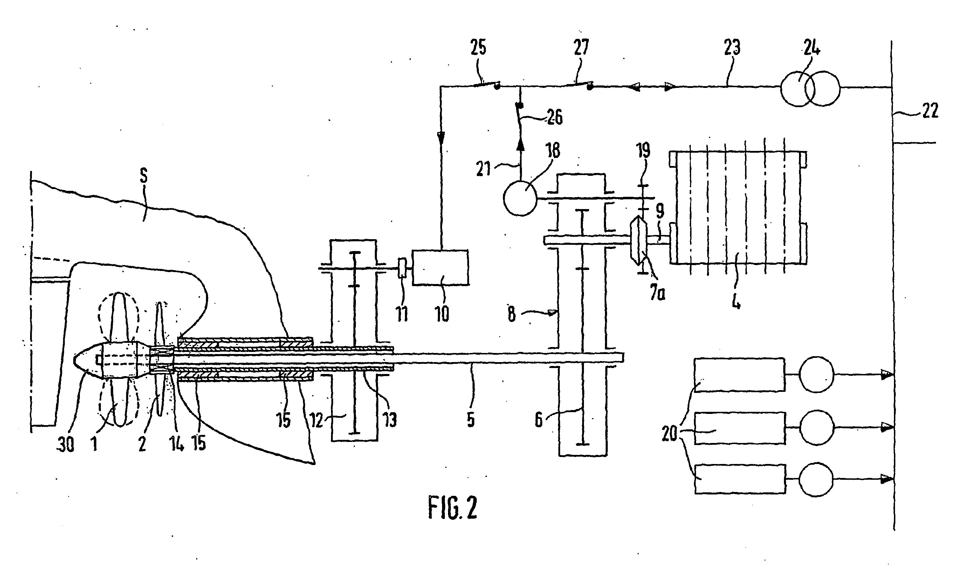

Der hintere, als Verstellpropeller ausgebildete Propeller 1 ist mittels einer Brennkraftmaschine, der sogenannten Hauptbrennkraftmaschine des Schiffs S, antreibbar. Dabei kann es sich um einen Hubkolbenmotor oder eine Turbine oder dergleichen handeln. Bei der Ausführung gemäß Figur 1 ist ein als langsam laufender Zweitakt-Großdieselmotor ausgebildeter Hauptmotor 3 vorgesehen. Bei der Ausführung gemäß Figur 2 ist ein als mittelschnell oder schnell laufender Viertakt-Großdieselmotor ausgebildeter Hauptmotor 4 vorgesehen.

Bei der Ausführung gemäß Figur 1 findet die Leistungsübertragung vom Hauptmotor 3 zum hiervon angetriebenen, hinteren Propeller 1 über eine Propellerwelle 5 statt, die direkt an den Abtriebsflansch der Kurbelwelle des Hauptmotors 3 angeflanscht sein kann. Bei der Ausführung gemäß Figur 2 ist die dem hinteren Propeller 1 zugeordnete Propellerwelle 5 mit dem Ausgang eines Untersetzungsgetriebes 6 antriebsmäßig verbunden, dessen Eingang mit dem Abtriebsflansch des Hauptmotors 4 verbunden ist. Durch das dem Hauptmotor 4 nachgeordnete Untersetzungsgetriebe 6 wird dabei die Drehzahl der Motorkurbelwelle auf die gewünschte Propeller-Drehzahl reduziert. Die bei Anordnungen hier vorliegender Art übliche, im Wellenzug zwischen Hauptmotor 3 bzw. 4 und Propeller 1 vorgesehene elastische Kupplung zur Dämpfung von Stößen sowie die der Motorkurbelwelle zugeordnete Schublageranordnung sind in den Figuren 1 und 2 zur Vereinfachung der Darstellung nicht gezeichnet.

Im Wellenzug zwischen Hauptmotor 3 bzw. 4 und hiervon angetriebenem Propeller 1 ist, wie die Figuren 1 und 2 weiter zeigen, eine Schaltkupplung 7 bzw. 7a vorgesehen, welche die antriebsmäßige Verbindung zwischen dem Hauptmotor 3 bzw. 4 und dem hinteren Propeller 1 unterbrechen kann. Hierdurch wird erreicht, dass der hintere Propeller 1 antriebslos gemacht werden und in diesem Fall freilaufend drehen kann. Bei der Anordnung gemäß Figur 1 ist die Schaltkupplung 7 auf der Welle 5 vorgesehen. Bei der Anordnung gemäß Figur 2 ist die Schaltkupplung 7a zweckmäßig zwischen dem Untersetzungsgetriebe 6 und dem Hauptmotor 4, hier auf der schnell drehenden Eingangswelle 9 des Untersetzungsgetriebes 6 angeordnet. Hierdurch wird erreicht, dass sich eine gegenüber der Ausführung gemäß Figur 1 kleinere und damit kostengünstigere Baugröße der Schaltkupplung 7a ergibt. Diese kann dabei innerhalb oder außerhalb eines das Untersetzungsgetriebe 6 enthaltenden Getriebegehäuses 8 angeordnet sein.

Die oben beschriebenen Komponenten bilden den dieselmechanischen Teil der erfindungsgemäßen, hybriden Antriebsanlage. Zum elektromechanischen Teil gehört, wie die Figuren 1 und 2 weiter zeigen, ein Elektromotor 10, der über eine elastische Kupplung 11 und ein nachgeordnetes Untersetzungsgetriebe 12 sowie eine Welle 13, den vorderen, bezüglich des hinteren Propellers 1 gegenläufigen Propeller 2 antreiben kann. Die Welle 13 ist als von der dem hinteren Propeller 1 zugeordneten Welle 5 durchgriffene, hierzu koaxiale Hohlwelle ausgebildet, die mit der Abtriebsseite des dem Elektromotor 10 nachgeordneten Untersetzungsgetriebes 12 antriebsmäßig verbunden ist. Dieses ist so ausgebildet, dass die Drehzahl des vorderen, als Festpropeller ausgebildeten Propellers 2 höchstens 70 %, vorzugsweise 50 % - 60 % der Drehzahl des hinteren, als Verstellpropeller ausgebildeten Propellers 1 beträgt. Dies stellt einen guten Kompromis zwischen der einerseits erwünschten, so niedrig wie möglichen Drehzahl des vorderen Propellers 2 und einer andererseits unerwünschten hohen Schaufelsteigung dar, die mit Abnahme der Drehzahl zunimmt.

Die Propellerverhältnisse, insbesondere die Propellergröße, werden in Abhängigkeit von der Art und Größe des Hauptmotors und der Leistungsverteilung zwischen den beiden koaxialen gegenläufigen Propellern 1, 2 gewählt. Bei der Anordnung gemäß Figur 1 ist die Größe des hinteren Propellers 1 direkt auf die Motordrehzahl abzustimmen, da hier die Drehzahl des hinteren Propellers 1 der Motordrehzahl entspricht, da kein Getriebe zwischen dem den Hauptmotor 3 bildenden Zweitakt-Großdieselmotor und der Welle 5 des hinteren Propellers 1 vorgesehen ist. Bei der Anordnung gemäß Figur 2 ergibt sich in dieser Hinsicht der Vorteil, dass je nach Untersetzungsverhältnis des dem den Hauptmotor 4 bildenden Viertakt-Großdieselmotor nachgeordneten Getriebes 6 unterschiedliche Drehzahlen des hinteren Propellers 1 und damit unterschiedliche Größen des Propellers 1 realisierbar sind.

Die zum Schutz des Elektromotors 10 vor Stößen und Wellenschwingungen etc. vorgesehene, zwischen dem Elektromotor 10 und der Eingangsseite des Untersetzungsgetriebes 12 platzierte, elastische Kupplung 11 kann zweckmäßig als hydrodynamische Kupplung ausgebildet sein, die eine Flüssigkeitsfüllung enthält. Hierdurch ist es möglich, die elastische Kupplung 11 einfach durch Ablassen der Flüssigkeit zu passivieren. Hierdurch kann die antriebsmäßige Verbindung zwischen dem vorderen Propeller 2 und dem diesem als Antriebsmotor zugeordneten Elektromotor 10 unterbrochen werden, so dass auch der vordere Propeller 2 je nach Umständen oder Bedarf freilaufend drehen kann, ohne dass der Elektromotor 10 mitlaufen muss. Dieser kann in derartigen Phasen gewartet oder ausgetauscht werden.

Die als Hohlwelle ausgebildete Welle 13 ist, wie die Figuren 1 und 2 zeigen, durch Traglager 15 im sogenannten Hinterstevenrohr des Schiffsrumpfes gelagert. Die die Welle 13 durchgreifende Welle 5 ist bei der den Figuren 1 und 2 zugrunde liegenden Ausführung mit ihrem hinteren Endbereich an der als Hohlwelle ausgebildeten Welle 13 gelagert. Hierzu ist ein am hinteren Endbereich der Hohlwelle 13 platziertes, in dieses oder die Nabe des vorderen Propellers eingebautes Traglager 14 vorgesehen. Dies ergibt praktisch eine fliegende Lagerung des den hinteren Propeller 1 aufnehmenden Endbereichs der Welle 5. Das benachbarte Ruder kann dabei, wie die Figuren 1 und 2 zeigen, als Vollschweberuder ausgebildet sein. Zur Erzielung günstiger Strömungsverhältnisse kann dabei die Nabe des hinteren Propellers 1 auf der vom vorderen Propeller 2 abgewandten Seite mit einem das hintere Ende der Welle 5 übergreifenden Strömungsleitkörper 30 versehen sein, der im dargestellten Beispiel als Rotationskörper mit teilelliptischem Querschnitt ausgebildet ist. Bewährt haben sich auch schon kegelstumpfförmige Strömungsleitkörper mit nach hinten zunehmendem Durchmesser. Duch Strömungsleitkörper werden Strömungsabrisse und unerwünschte Wirbel vermieden.

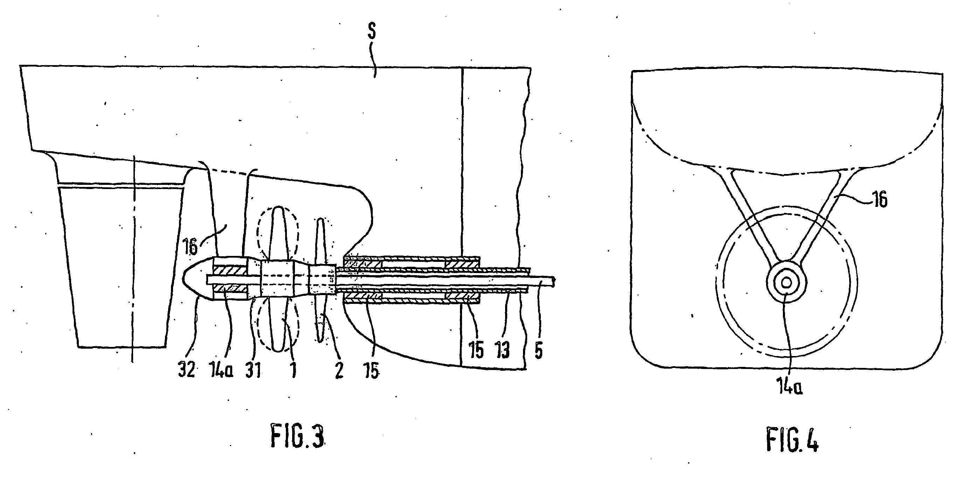

Eine alternative Ausführung ist in den Figuren 3 und 4 gezeigt. Bei dieser Ausführung ist die dem hinteren Propeller 1 zugeordnete Welle 5 zur Vermeidung einer fliegenden Lagerung mit einer über den hinteren Propeller 1 nach hinten hinausgehenden Verlängerung versehen, die in ein Traglager 14a eingreift, das in einem zugeordneten, am Schiffsrumpf angebrachten Wellenbock 16 aufgenommen ist. Hierdurch ergibt sich eine leicht inspizierbare und gut zugängliche Anordnung des Traglagers 14a, was im Schiffsbau erwünscht ist. Außerdem lassen sich günstige Biegemomentverhältnisse bezüglich der Welle 5 erreichen. Zur Erzielung günstiger Strömungsverhältnisse kann der Abstand zwischen der Nabe des Propellers 1 und der benachbarten Traglageranordnung durch einen kegelstumpfförmigen Strömungsleitkörper 31 überbrückt sein. Ein ähnlicher kegelstumpfartiger Strömungsleitkörper kann selbstverständlich auch im Bereich zwischen den Naben der Propeller 1 und 2 vorgesehen sein. Dies ist besonders dort günstig, wo der hintere Propeller 1 als Verstellpropeller ausgebildet ist, dessen Nabe zwangsläufig einen größeren Durchmesser als die Nabe des vorderen, als Festpropeller ausgebildeten Propellers 2 hat. Das gilt auch für die Figuren 1 und 2. Ebenso kann an der propellerfernen Rückseite der Traglageranordnung ein Strömungskörper 32 angeordnet sein. Wellenböcke vorstehend erwähnter Art stellen, z. B. bei schlanken Zweischraubenschiffen, bewährte Komponenten dar.

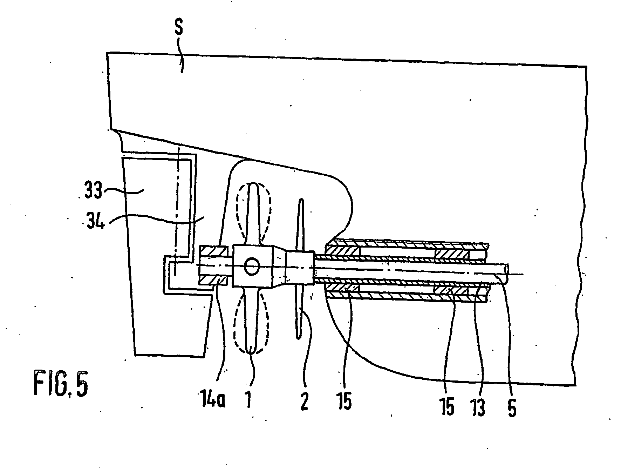

Die Figur 5 zeigt eine Variante zu der Ausführung gemäß Figuren 3 und 4. Das der Figur 5 zugrunde liegende Schiff S ist mit einem sogenannten Halbschweberuder 33 versehen, das auf einer zugeordneten Halterung in Form des am Schiffsrumpf angebrachten Ruderhorns 34 gelagert ist. Die Welle 5 ist dabei mit ihrer über den zugeordneten Propeller 1 nach hinten hinausgehenden Verlängerung auf dem Ruderhorn 34 gelagert. Dementsprechend ist das dem hinteren Ende der Welle 5 zugeordnete Traglager 14a hier in das Ruderhorn 34 eingebaut. Die dem als Verstellpropeller ausgebildeten hinteren Propeller 1 zugeordnete Ölversorgung kann über das Ruderhorn 34 laufen.

Auch bei dieser Ausführung können zwischen den Naben der Propeller 1, 2 sowie zwischen der Nabe des Propellers 1 und der benachbarten Traglageranordnung Strömungsleitkörper oben genannter Art vorgesehen sein. Das das Traglager 14a aufnehmende Ruderhorn 34 kann zur Erzielung günstiger Strömungsverhältnisse im Bereich des Traglagers 14a nach Art eines Leitkörpers konturiert sein. Dabei können sich auf beiden Seiten birnenartige Ausbuchtungen ergeben.

Eine weitere Möglichkeit zur Erzielung günstiger Strömungsverhältnisse bei Propelleranordnungen der den Figuren 1-5 zugrundeliegenden Art kann darin bestehen, jeweils ein zumindest den hinteren Propeller 1, vorzugsweise beide Propeller 1 und 2 teilweise oder vorzugsweise ganz umfassendes Strömungsleitgehäuse, d. h. eine sogenannte Kortdüse, vorzusehen. Eine derartige Anordnung, die für alle Ausführungen der Figuren 1 - 5 in Frage kommen kann, ist aus Gründen der Übersichtlichkeit der Zeichnung nicht dargestellt.

Zum elektromechanischen Teil der erfindungsgemäßen, hybriden Antriebsanlage gehört, wie Figuren 1 und 2 weiter zeigen, ein stromerzeugender, vom jeweiligen Hauptmotor 3, 4 antreibbarer, sogenannter Wellengenerator 18. Diese Bezeichnung beruht darauf, dass der Wellengenerator 18 antriebsmäßig an die Motorkurbelwelle angehängt ist. In der Regel ist dabei ein Übersetzungsgetriebe dazwischen geschaltet. Bei der Anordnung gemäß Figur 1 ist der Wellengenerator 18 unter Zwischenschaltung eines Übersetzungsgetriebes 17 an das der Propelleranordnung entgegengesetzte Ende der Motorkurbelwelle des Hauptmotors 3 angehängt. Eine Anordnung dieser Art wäre auch bei der Verwendung eines Viertakt-Großdieselmotors als Hauptmotor der der Figur 2 zugrunde liegenden Art denkbar. In dem in Figur 2 gezeigten Ausführungsbeispiel ist der Wellengenerator 18 über ein vorgeordnetes Übersetzungsgetriebe 19 mit der an den Abtriebsflansch des Hauptmotors 4 angeflanschten, mit der Welle 5 des hinteren Propellers 1 über das Untersetzungsgetriebe 6 verbundenen Welle 9 antriebsmäßig verbunden. Vom Wellengenerator 18 führt in jedem Fall ein Strompfad 21 zum Elektromotor 10, der auf diese Weise Strom vom Wellengenerator 18 beziehen kann.

Zweckmäßig ist das Übersetzungsgetriebe 19 bei der Ausführung gemäß Figur 2 der durch die oben erwähnte Kupplung 7a gebildeten Unterbrechung der Welle 9 vorgeordnet, d.h. dem motorseitigen Bereich der Welle 9 zugeordnet. Im dargestellten Beispiel ist das Übersetzungsgetriebe 19, wie in Figur 2 schematisch angedeutet ist mit der Schaltkupplung 7a kombiniert. Die mit dem motorseitigen Abschnitt der Welle 9 verbundene Kupplungshälfte ist hier mit einem äußeren Zahnkranz versehen, der einen Teil des Übersetzungsgetriebes 19 bildet. Das der Welle 5 zugeordnete Untersetzungsgetriebe 6 ist der durch die Schaltkupplung 7a gebildeten Unterbrechung der Welle 9 nachgeordnet. Es ist daher möglich den Propeller 1 vom Hauptmotor 4 abzukuppeln und dennoch den Wellengenerator 18 anzutreiben, wie das auch bei der Ausführung gemäß Figur 1 möglich ist.

Das Übersetzungsgetriebe 19 kann zusammen mit der Kupplung 7a im Getriebegehäuse 8 des Untersetzungsgetriebes 6 angeordnet sein, was eine kompakte Anordnung ergibt. Bei der in Figur 2 gezeichneten Ausführung ist die Kupplung 7a außerhalb des Getriebegehäuses 8 vorgesehen. Die schnellere, mit dem Wellengenerator 18 verbundene Welle des Übersetzungsgetriebes 19 ist hier im Getriebegehäuse gelagert.

Gleichzeitig oder alternativ zur Strombeaufschlagung durch den Wellengenerator 18 kann der Elektromotor 10 auch Strom aus dem an Bord vorhandenen elektrischen Netz 22 beziehen, wie durch einen Strompfad 23 angedeutet ist, der in den dargestellten Beispielen mit einem Frequenzumwandler 24 versehen ist. Das elektrische Bordnetz 22 wird durch an Bord vorhandene Dieselgeneratoren 20 mit Strom gespeist. Dabei handelt es sich um durch jeweils einen in der Regel schnell laufenden Dieselmotor angetriebene Generatoren. An Bord eines Schiffes sind in der Regel, wie in den Figuren 1 und 2 angedeutet ist, drei unabhängige Dieselgeneratoren 20 vorgesehen, von denen einer den Bordbedarf an elektrischer Energie auf See, ein zweiter den Strombedarf beim Manovieren mit dem Bugstrahlruder oder beim Laden und Löschen im Hafen liefert. Der dritte Dieselgenerator 20 muss immer in Reserve bereit sein (stand-by). Selbstverständlich wäre es natürlich auch möglich die zur Verfügung stehenden Dieselaggregate 20 nicht über das Bordnetz 22 sondern direkt mit dem Elektromotor 10 zu koppeln. Die vorstehend geschilderte, an Bord vorhandene elektrische Leistungsreserve inform der Dieselgeneratoren 20 zählt praktisch ebenfalls zum elektromechanischen Teil der erfindungsgemäßen, hybriden Antriebsanlage.

Dem Hauptmotor 3 bzw. 4 sowie jedem der Dieselgeneratoren 20 sind zweckmäßig voneinander getrennte Versorgungssysteme bezüglich Treibstoff, Schmieröl, Luft, Kühlwasser etc. zugeordnet, so dass eine voneinander getrennte Betriebsweise möglich ist. Der Elektromotor 10 kann dementsprechend, wie schon erwähnt, vom Wellengenerator 18 und/oder von einem oder zwei der Dieselgeneratoren 20 mit Strom versorgt werden. Ebenso ist es möglich, dass das elektrische Bordnetz 22 vom Wellengenertor 18 mit Strom gespeist wird.

Dem Stromeingang des Elektromotors 10 ist ein Schalter 25 vorgeordnet, der in Serie zu den parallelen Strompfaden 21 und 23 liegt und durch den daher der Elektromotor 10 sowohl vom Wellengenerator 18 als auch vom elektrischen Bordnetz 22 getrennt werden kann. Weitere Schalter 26 bzw. 27 sind in den Strompfaden 21 bzw. 23 angeordnet. In den Figuren 1 und 2 sind alle drei Schalter 25, 26, 27 in der geschlossenen Stellung dargestellt. Bei dieser Schalterstellung wird der Elektromotor 10 sowohl vom Wellengenerator 18 als auch vom elektrischen Bordnetz 22 mit Strom versorgt. Sofern nur die Schalter 25, 26 geschlossen sind und der Schalter 27 geöffnet ist, wird der Elektromotor 10 nur vom Wellengenerator 18 mit Strom versorgt. Sofern andererseits die Schalter 25, 27 geschlossen sind und der Schalter 26 geöffnet ist, wird der Elektromotor 10 nur vom Bordnetz 22 mit Strom versorgt. Sofern der Schalter 25 geöffnet ist und die Schalter 26, 27 geschlossen sind, ergibt sich eine Verbindung vom Wellengenerator 18 zum Bordnetz 22, so dass der Wellengenerator 18 Strom in das Bordnetz 22 einspeisen kann. Durch den Freuquenzumwandler 24 wird dabei verhindert, dass Frequenzstörungen in das Bordnetz 22 gelangen können. Da infolge der Verstellbarkeit der Flügel des hinteren Propellers 1 die Drehzahl der Welle 5 und damit der Motorkurbelwelle sowie des hieran angehängten Wellengenerators 18 konstant gehalten werden können, kann auf den Frequenzumwandler 24 oder etwas ähnliches vielfach verzichtet werden.

Mit der erfindungsgemäßen, hybriden Antriebsanlage können verschiedene Betriebsarten bewerkstelligt werden, wobei in jedem Fall die bereit gestellte Antriebsleistung unter Berücksichtigung der Wirtschaftlichkeit und Betriebssicherheit an die Verhältnisse des Einzelfalls angepasst werden kann. Im Folgenden werden einzelne Betriebsarten näher erläutert:

### 1. Normaler Schiffsbetrieb

Im normalen Schiffsbetrieb sind beide Propeller 1, 2 aktiv, werden jedoch nur durch den Hauptmotor 3 bzw. 4 angetrieben, der preisgünstiges Schweröl verbrennen kann und sparsam im Verbrauch ist. Der Elektromotor 10 wird hierbei dementsprechend nur von dem vom Hauptmotor 3 bzw. 4 angetriebenen Wellengenerator 18 mit Strom versorgt. Dementsprechend sind die Schalter 25, 26 geschlossen. Der Schalter 27 ist geöffnet.

Durch die doppelte Energieumwandlung von mechanischer Energie in elektrischer Energie und umgekehrt wird zwar ein Wirkungsgradverlust verursacht. Dieser bezieht sich jedoch nur auf einen Teil der gesamten Antriebsleistung und wird durch den Wirkungsgradgewinn der zwei gegenläufige, hintereinander angeordnete Propeller 1, 2 enthaltenden Doppelpropelleranordnung mehr als kompensiert. Um dem Rechnung zu tragen, ist der Wellengenerator 18 zweckmäßig so dimensioniert, dass die von ihm aufnehmbare Leistung höchstens 20 bis 30 %, vorzugsweise 25 %, der maximalen Dauerleistung des zugeordneten Hauptmotors 3 bzw. 4 beträgt.

### 2. Teillast-Schiffsbetrieb

Bei Handelsschiffen gibt es oft Betriebszustände, bei denen nicht die normale Dienstgeschwindigkeit bzw. Antriebsleistung verlangt wird, wie z. B. bei günstigen Wetterverhältnissen, geringen Ladungsmengen und dergl. In solchen Fällen wird der Elektromotor 10 durch Öffnen des Schalter 25 von der Stromversorgung getrennt, d. h. auf Leerlauf gestellt, so dass der vordere Propeller 2 nicht angetrieben wird und frei drehen kann. Sofern die Kupplung 11 als hydrodynamische Kupplung ist, kann diese entleert werden, so dass der Elektromotor steht. Das Schiff verfügt hier mit dem mittels des Hauptmotors 3 bzw. 4 angetriebenen, hinteren Propeller 1 über ein ganz einfaches und robustes, normales Einpropeller-Antriebssystem. Modelversuche haben gezeigt, dass der frei drehende, vordere Propeller 2 keine nennenswerten Verluste der Antriebsleistung verursacht.

Wenn der vordere Propeller 2 frei läuft, ändern sich die Zuströmverhältnisse zum hinteren Propeller 1. Da dieser als Verstellpropeller ausgebildet ist, können seine Flügel so verstellt werden, dass sich eine Flügelsteigung ergibt, bei der der Propeller 1 vergleichsweise leicht dreht, wodurch eine thermische Überlastung des Hauptmotors 3 bzw. 4 verhindert wird.

Der Wellengenerator 18 kann in Fällen vorliegender Art ebenfalls auf Leerlauf gestellt sein oder, sofern das Bordnetz 22 Strom aufnehmen kann, an dieses Strom liefern. In diesem letzten Fall sind nur die Schalter 26, 27 geschlossen und Schalter 25 geöffnet.

### 3. Langsame Fahrt oder Notbetrieb

Bei langsamer Fahrt des Schiffes, wie z. B. bei der Fahrt durch Kanäle und Schleusen, kann das Schiff nur mit dem vom vorderen Propeller 2 erzeugten Antrieb fahren. Dasselbe gilt für Notfälle, in denen der Hauptmotor 3 bzw. 4 ausfällt. Der hintere Propeller 1 wird dabei vom Hauptmotor 3 bzw. 4 durch entsprechende Betätigung der Schaltkupplung 7 bzw. 7a abgekuppelt, so dass er frei drehen kann. Der dadurch verursachte Verlust an Antriebsleistung hat in Fällen hier vorliegender Art keine Bedeutung. Der den vorderen Propeller 2 antreibende Elektromotor 10 bezieht hier den benötigten Strom aus dem Bordnetz 22 bzw. von den aktivierten Dieselaggregaten 20. Die Schalter 25 und 27 sind dementsprechend geschlossen. Der Schalter 26 ist geöffnet, um den Wellengenerator 18 stromlos zu stellen. Da eine sehr langsame Fahrt, z. B. durch Kanäle oder Schleusen etc., in der Regel nicht lange dauert, ist auch der Wirkungsgrad der Antriebsanlage in diesem Betriebszustand nicht entscheidend. Dasselbe gilt für Notfälle. Einen wirtschaftlichen Vorteil stellt es jedoch dar, dass das Schiff in derartigen Betriebsfällen nicht auf sehr teure und zeitraubende Hilfe von Schleppern angewiesen ist.

### 4. Booster-Betrieb

In der Praxis ist es zur Erzielung einer ausreichenden Wirtschaftlichkeit sehr wichtig, dass die Dienstgeschwindigkeit eines Schiffes, je nach Marktforderungen im Bedarfsfall steigen kann. Dafür braucht das Schiff gegenüber dem Normalbetrieb zusätzliche Antriebsleistung, die von einer sogenannten Booster-Einrichtung geliefert werden muss.

Beim Gegenstand der vorliegenden Erfindung besteht die Booster-Einrichtung aus der dem vorderehen Propeller 2 zugeordneten Antriebseinrichtung mit dem Elektromotor 10, der beim Booster-Betrieb von allen verfügbaren Stromquellen mit Strom versorgt wird, also vom Wellengenerator 18 und über das Bordnetz 22 von den verfügbaren Dieselgeneratoren 20, das können alle Dieselgeneratoren 20 abzüglich des einen in stand-by-Stellung zu haltenden Dieselgenerators 20 sein. Zweckmäßig ist dabei die Leistungsaufnahme des vom Hauptmotor 3 bzw. 4 zusätzlich zum hinteren Propeller 1 antreibbaren Wellengenerators 18 so gesteuert, dass der Wellengenerator 18 nur so viel Leistung aufnimmt, wie zusätzlich zu der aus dem Bordnetz 22 entnehmbaren Leistung benötigt wird, um ein optimales Verhältnis zwischen den Antriebswirkungen der beiden Propeller 1, 2 zu erreichen. Dabei kann die vom Wellengenerator aufgenommene Leistung im Einzelfall auch gegen Null gehen. Durch die genannte Steuerung wird in jedem Fall einerseits der hydrodynamische Wirkunsgrad der durch die hintereinander angeordneten, gegenläufigen Propeller 1, 2 gebildeten Doppelpropelleranordnung optimiert und andererseits der Verlust, der sich auf Grund der doppelten Energieumwandlung von mechanischer Energie in elektrische Energie und umgekehrt ergibt, minimiert, so dass sich insgesamt ein ausgezeichneter Gesamtwirkungsgrad ergibt.

Der Booster-Betrieb der erfindungsgemäßen Antriebsanlage stellt sicher, dass auch bei schlechtem Wetter und harten Charterbedingungen, die erfüllt werden müssen, der Fahrplan eingehalten werden kann, was die Wirtschaftlichkeit des gesamten Schiffes verbessern kann. Die genannten Maßnahmen ermöglichen in vorteilhafter Weise auch eine spätere Anpassung eines bereits in Dienst gestellten Schiffes an im Laufe der Zeit steigende Anforderungen. Je nachdem, wie die zukünftigen Betriebszustände eines Schiffes eingeschätzt werden, kann der elektrische Anteil der Antriebsleistung bereits im Entwurfsstadium im Bereich frei, z. B. zwischen 10 % und 50 % der gesamten Antriebsleistung, gewählt werden. Die Verstellbarkeit der Flügel des als Verstellpropeller ausgebildeten hinteren Propellers 1 stellt sicher, dass im Betrieb eine Anpassung an den Einzelfall möglich ist.

Die vorstehenden Ausführungen zeigen, dass die erfindungsgemäße, hybride Antriebsanlage für alle, in der Praxis vorkommenden Betriebszustände geeignet ist und damit eine hohe Fähigkeit zur Anpassung an die Verhältnisse des Einzelfalls unter Berücksichtigung der Wirtschaftlichkeit und Sicherheit ergibt. Ein weiterer Vorteil ist darin zu sehen, dass die erfindungsgemäße Antriebsanlage nur aus bekannten und in der Praxis bewährten Komponenten zusammengestellt ist.

Vorstehend sind einige bevorzugte Ausführungsbeispiele der Erfindung näher erläutert, ohne dass jedoch hiermit eine Beschränkung verbunden sein soll. So könnten als mechanische Antriebsquelle an Stelle eines Hauptmotors auch zwei über ein Sammelgetriebe antriebsmäßig miteinander verbundene Motoren Verwendung finden. Ebenso wäre es denkbar, für ein und dasselbe Schiff mehrere, parallele koaxiale, gegenläufige Doppelpropelleranordnungen der dargestellten Art vorzusehen.

## Patentansprüche

1. Antriebsanlage für maritime Objekte, insbesondere Schiffe, mit wenigstens einem Paar von zwei koaxial hintereinander angeordneten, gegenläufigen, gleichzeitig oder alternativ antreibbaren Propellern (1, 2), die jeweils auf einer zugeordneten Welle (5, 13) aufgenommen sind, wobei die dem vorderen Propeller (2) zugeordnete Welle (13) als von der dem hinteren Propeller (1) zugeordneten Welle (5) durchgriffene Hohlwelle ausgebildet ist und wobei die dem hinteren Propeller (1) zugeordnete Welle (5) mittels wenigstens einer an Bord vorhandenen Hauptbrennkraftmaschine (3, 4) und die dem vorderen Propeller (2) zugeordnete Welle (13) mittels wenigstens eines zugeordneten Elektromotors (10) antreibbar sind, wobei der hintere Propeller (1) einen größeren Durchmesser aufweist als der vordere Propeller (2), wobei der Elektromotor (10) wahlweise von einem von der Hauptbrennkraftmaschine (3, 4) zusätzlich antreibbaren Wellengenerator (18) und/oder von an Bord befindlichen Hilfsaggregaten (20) mit Strom versorgbar ist, und wobei die Gesamtvorschubleistung bei gleichzeitig mit der Hauptbrennkraftmasschine (3, 4) aktivierten Hilfsaggregaten (20) größer als die von der Hauptbrennkraftmaschine (3, 4) maximal erzeugbare Vorschubleistun ist.

2. Antriebsanlage nach Anspruch 1, dadurch gekenntzeichnet, dass der hintere Propeller (1) als verstellbare Flügel aufweisender Verstellpropeller ausgebildet ist.

3. Antriebsanlage nach einem der vorhergehenden Ansprüche, **dadurch gekennzeichnet, dass** der vordere Propeller (2) als feste Flügel aufweisender Festpropeller ausgebildet ist.

4. Antriebsanlage nach einem der vorhergehenden Ansprüche, **dadurch gekennzeichnet, dass** die Drehzahl des vorderen, als Festpropeller ausgebildeten Propellers (2) höchstens 70%, vorzugsweise 50 - 60 % der Drehzahl des hinteren, als Verstellpropeller ausgebildeten Propellers (1) beträgt.

5. Antriebsanlage nach einem der vorhergehenden Ansprüche, **dadurch gekennzeichnet, dass** die Welle (5) des hinteren Propellers (1) mittels einer Schaltkupplung (7 bzw. 7a) vom Hauptmotor (3 bzw. 4) abkuppelbar ist

6. Antriebsanlage nach einem der vorhergehenden Ansprüche, **dadurch gekennzeichnet, dass** bei einer Ausgestaltung der Hauptbrennkraftmaschine (3) als langsam laufende Brennkraftmaschine, insbesondere Zweitakt-Großdieselmotor, die dem hinteren Propeller (1) zugeordnete, die Schaltkupplung (7) enthaltende Welle (5) direkt mit einem Ende der Motorwelle gekuppelt ist.

7. Antriebsanlage nach einem der vorhergehenden Ansprüche 1 - 5, **dadurch gekennzeichnet, dass** bei einer Ausgestaltung der Hauptbrennkraftmaschine (4) als mittelschnell oder schnell laufende Brennkraftmaschine, insbesondere Viertakt-Großdieselmotor, dieser unter Zwischenschaltung der Schaltkupplung (7a) ein Untersetzungsgetriebe (6) nachgeordnet ist, mit dessen Ausgang die dem hinteren Propeller (1) zugeordnete Welle (5) antriebsmäßig verbunden ist.

8. Antriebsanlage nach einem der vorhergehenden Ansprüche, da-durch gekennzeichnet, dass der Wellengenerator (18) über ein Übersetzungsgetriebe (17 bzw. 19) mit der Welle der Hauptbrennkraftmaschine (3 bzw. 4) antriebsmäßig verbunden ist.

9. Antriebsanlaage nach Anspruch 8, **dadurch gekennzeichnet, dass** das dem Wellengenerator (18) zugeordnete Übersetzungsgetriebe (17 bzw. 19) mit einem auch bei gelöster Schaltkupplung (7 bzw. 7a) von der Hauptbrennkraftmaschine (3 bzw. 4) antreibbaren Bauteil antriebsmäßig verbunden ist.

10. Antriebsanlage nach einem der vorhergehenden Ansprüche, **dadurch gekennzeichnet, dass** der Elektromotor (10) mit dem Eingang eines nachgeordneten Untersetzungsgetriebes (12) gekuppelt ist, dessen Abtrieb mit der dem vorderen Propeller (2) zugeordneten Welle (13) zusammenwirkt.

11. Antriebsanlage nach Anspruch 10, **dadurch gekennzeichnet, dass** zwischen dem Elektromotor (10) und dem nachgeordneten Untersetzungsgetriebe (12) eine elastische Kupplung (11) angeordnet ist.

12. Antriebsanlage nach Anspruch 11, **dadurch gekennzeichnet, dass** die elastische Kupplung (11) als hydrodynamische Kupplung ausgebildet ist.

13. Antriebsanlage nach einem der vorhergehenden Ansprüche, **dadurch gekennzeichnet, dass** die dem hinteren Propeller (1) zugeordnete Welle (5) mit einer über den Propeller (1) hinausgehenden Verlängerung in einem Traglager (14a) gelagert ist, das in einem zugeordneten, am Rumpf des maritimen Objekts angebrachten Tragorgan aufgenommen ist.

14. Antriebsanlage nach Anspruch 13, dadurch gekenntzeichnet, dass das Traglager (14a) bei einem maritimen Objekt mit einem auf einem Ruderhorn (34) gelagerten Halbschweberuder (33) in das Ruderhorn (34) eingebaut ist.

15. Antriebsanlage nach einem der vorhergehenden Ansprüche, **dadurch gekennzeichnet, dass** zumindest dem hinteren Ende der dem hinteren Propeller (1) zugeordneten Welle (5) ein Strömungsleitkörper (30 bzw. 32) zugeordnet ist, der vorzugsweise kegelstumpfförmig ausgebildet ist..

16. Antriebsanlage nach einem der vorhergehenden Ansprüche, **dadurch gekennzeichnet, dass** der Übergang zwischen den Naben der Propeller (1, 2) als Strömungsleitkörper (31) ausgebildet ist.

17. Antriebsanlage nach einem der vorhergehenden Ansprüche, **dadurch gekennzeichnet, dass** der Hauptbrennkraftmaschine (3 bzw. 4) und jedem der Hilfsaggregate (20) voneinander getrennte Versorgungssysteme zugeordnet sind.

18. Antriebsanlage nach einem der vorhergehenden Ansprüche, dadurch gekennzeichent, dass der Ausgang des Wellengenerators (18) so mit dem an Bord befindlichen Stromnetz (22) verbindbar ist, dass Strom in das Stromnetz (22) einspeisbar ist.

19. Antriebsanlage nach einem der vorhergehenden Ansprüche, **dadurch gekennzeichnet, dass** in der Leitung zwischen dem Wellengenerator und dem Bord-Stromnetz (22) ein Frequenzumwandler (24) vorgesehen ist.

20. Antriebsanlage nach einem der vorhergehenden Ansprüche, **dadurch gekennzeichnet, dass** bei Aktivierung der Hilfsaggregate (20) zur Unterstützung der Hauptbrennkraftmaschine (3 bzw. 4) ein Hilfsaggregat (20) in stand by-Stellung bleibt.

21. Antriebsanlage nach einem der vorhergehenden Ansprüche, **dadurch gekennzeichnet, dass** bei Aktivierung der Hilfsaggregate (20) zur Unterstützung der Hauptbrennkraftmaschine (3 bzw. 4) die Leistungsaufnahme des von der Hauptbrennkraftmaschine (3 bzw. 4) zusätzlich antreibbaren Wellengenerators (18) so gesteuert wird, dass der Wellengenerator (18) nur soviel Leistung aufnimmt, wie zusätzlich zur Leistung der Hilfsaggregate (20) für ein optimales Verhältnis zwischen den Antriebswirkungen der beiden Propeller (1, 2) benötigt wird.

22. Antriebsanlage nach einem der vorhergehenden Ansprüche, **dadurch gekennzeichnet, dass** die vom Wellengenerator (18) aufnehmbare Leistung höchstens 20 - 30%, vorzugsweise 25%, der maximalen Dauerleistung der Hauptbrennkraftmäschine (3, 4) beträgt.

## Claims

1. A propulsion system for maritime objects, in particular ships, having at least one pair of contra-rotating propellers (1, 2) which are arranged coaxially one behind the other, can be driven simultaneously or alternately and are in each case accommodated on an associated shaft (5, 13), wherein the shaft (13) that is associated with the front propeller (2) is formed as a hollow shaft through which the shaft (5) that is associated with the rear propeller (1) passes and wherein the shaft (5) that is associated with the rear propeller (1) can be driven by means of at least one main internal combustion engine (3, 4) that is present on board and the shaft (13) that is associated with the front propeller (2) can be driven by means of at least one associated electric motor (10), whereby the rear propeller (1) has a larger diameter than the front propeller (2), whereby the electric motor (10) can be supplied with current selectively by a shaft generator (18), which can additionally be driven by the main internal combustion engine (3, 4), and/or by auxiliary units (20) located on board, and whereby the total advancing power when auxiliary units (20) are activated at the same time as the main internal combustion engine (3, 4) being greater than the maximum advancing power that can be generated by the main internal combustion engine (3, 4).

2. A propulsion system according to claim 1, **characterised in that** the rear propeller (1) is formed as an adjustable propeller that has adjustable blades.

3. A propulsion system according to one of the preceding claims, **characterised in that** the front propeller (2) is formed as a fixed propeller that has fixed blades.

4. A propulsion system according to one of the preceding claims, **characterised in that** the speed of the front propeller (2) that is formed as a fixed propeller amounts at most to 70%, preferably 50 - 60%, of the speed of the rear propeller (1) that is formed as an adjustable propeller.

5. A propulsion system according to one of the preceding claims, **characterised in that** the shaft (5) of the rear propeller (1) can be decoupled from the main motor (3 or 4 respectively) by means of a shifting coupling (7 or 7a respectively).

6. A propulsion system according to one of the preceding claims, **characterised in that** in the case of a design of the main internal combustion engine (3) as a slow-speed internal combustion engine, in particular a large two-stroke diesel engine, the shaft (5) that is associated with the rear propeller (1) and contains the shifting coupling (7) is directly coupled to one end of the motor shaft.

7. A propulsion system according to one of the preceding claims 1 - 5, **characterised in that** in the case of a design of the main internal combustion engine (4) as a medium-speed or high-speed internal combustion engine, in particular a large four-stroke diesel engine, arranged downstream of the latter with interconnection of the shifting coupling (7a) there is a step-down gear unit (6) with whose output the shaft (5) associated with the rear propeller (1) is connected in terms of drive.

8. A propulsion system according to one of the preceding claims, **characterised in that** the shaft generator (18) is connected to the shaft of the main internal combustion engine (3 or 4 respectively) in terms of drive by way of a step-up gear unit (17 or 19 respectively).

9. A propulsion system according to claim 8, **characterised in that** the step-up gear unit (17 or 19 respectively) associated with the shaft generator (18) is connected in terms of drive to a component that can be driven by the main internal combustion engine (3 or 4 respectively) even in the case of a disengaged shifting coupling (7 or 7a respectively).

10. A propulsion system according to one of the preceding claims, **characterised in that** the electric motor (10) is coupled to the input of a downstream step-down gear unit (12) whose output drive cooperates with the shaft (13) that is associated with the front propeller (2).

11. A propulsion system according to claim 10, **characterised in that** an elastic coupling (11) is arranged between the electric motor (10) and the downstream step-down gear unit (12).

12. A propulsion system according to claim 11, **characterised in that** the elastic coupling (11) is formed as a hydrodynamic coupling.

13. A propulsion system according to one of the preceding claims, **characterised in that** the shaft (5) that is associated with the rear propeller (1) is mounted with an extension going beyond the propeller (1) in a supporting bearing (14a) that is received in an associated supporting part that is provided on the hull of the maritime object.

14. A propulsion system according to claim 13, **characterised in that** in the case of a maritime object that has a semi-balanced rudder (33) mounted on a rudder horn (34) the supporting bearing (14a) is installed in the rudder horn (34).

15. A propulsion system according to one of the preceding claims, **characterised in that** a flow-directing body (30 or 32 respectively), which is preferably formed in the shape of a truncated cone, is associated at least with the rear end of the shaft (5) that is associated with the rear propeller (1).

16. A propulsion system according to one of the preceding claims, **characterised in that** the transition between the hubs of the propellers (1, 2) is formed as a flow-directing body (31).

17. A propulsion system according to one of the preceding claims, **characterised in that** separate supply systems are associated with the main internal combustion engine (3 or 4 respectively) and each of the auxiliary units (20).

18. A propulsion system according to one of the preceding claims, **characterised in that** the output of the shaft generator (18) can be connected to the electric network (22) located on board in such a way that current can be fed into the electric network (22).

19. A propulsion system according to one of the preceding claims, **characterised in that** a frequency converter (24) is provided in the line between the shaft generator and the on-board electric network (22).

20. A propulsion system according to one of the preceding claims, **characterised in that** when the auxiliary units (20) are activated in order to assist the main internal combustion engine (3 or 4 respectively) one auxiliary unit (20) remains in a stand-by position.

21. A propulsion system according to one of the preceding claims, **characterised in that** when the auxiliary units (20) are activated in order to assist the main internal combustion engine (3 or 4 respectively) the power consumption of the shaft generator (18), which can additionally be driven by the main internal combustion (3 or 4 respectively), is controlled in such a way that the shaft generator (18) only consumes as much power as that which is required in addition to the power of the auxiliary units (20) for an optimum ratio between the driving effects of the two propellers (1, 2).

22. A propulsion system according to one of the preceding claims, **characterised in that** the power that can be consumed by the shaft generator (18) amounts at most to 20 - 30 %, preferably 25%, of the maximum continuous power of the main internal combustion engine (3, 4).

## Revendications

1. Système de propulsion destiné à des objets maritimes, en particulier à des navires, avec au moins une paire de deux hélices (1, 2) contrarotatives disposées l'une derrière l'autre de façon coaxiale qui peuvent être entraînées simultanément ou alternativement et qui sont reçues respectivement sur un arbre associé (5, 13), l'arbre (13) associé à l'hélice avant (2) étant réalisé comme arbre creux qui est traversé par l'arbre (5) associé à l'hélice arrière (1), et l'arbre (5) associé à l'hélice arrière (1) pouvant être entraîné au moyen d'au moins un moteur principal à combustion interne (3, 4) se trouvant à bord et l'arbre (13) associé à l'hélice avant (2) pouvant être entraîné par l'intermédiaire d'au moins un moteur électrique associé (10), et voilà que l'hélice arrière (1) présente un diamètre supérieur à celui de l'hélice avant (2), et voilà que ledit moteur électrique (10) peut être alimenté en courant facultativement par un alternateur de ligne d'arbre (18) que ledit moteur principal à combustion interne (3,4) peut entraîner en sus, et/ou par des groupes auxiliaires (20) se trouvant à bord, et voilà que la puissance totale d'avance, lorsque les groupes auxiliaires (20) sont activés simultanément avec le moteur principal à combustion interne (3, 4), étant supérieure à la puissance d'avance qui peut être produite au maximum par le moteur principal à combustion interne (3, 4).

2. Système de propulsion selon la revendication 1, **caractérisé par le fait que** l'hélice arrière (1) est réalisée comme hélice réglable présentant des pales réglables.

3. Système de propulsion selon l'une des revendications précédentes, **caractérisé par le fait que** l'hélice avant (2) est réalisée comme hélice fixe présentant des pales fixes.

4. Système de propulsion selon l'une des revendications précédentes, **caractérisé par le fait que** le nombre de tours de l'hélice avant (2) réalisée comme hélice fixe est de 70 % au maximum, de préférence est compris entre 50 et 60 % du nombre de tours de l'hélice arrière (1) réalisée comme hélice réglable.

5. Système de propulsion selon l'une des revendications précédentes, **caractérisé par le fait que** l'arbre (5) de l'hélice arrière (1) peut être découplé du moteur principal (3 ou bien 4) au moyen d'un embrayage (7 ou bien 7a).

6. Système de propulsion selon l'une des revendications précédentes, **caractérisé par le fait que**, lorsque le moteur principal à combustion interne (3) est réalisé comme moteur à combustion interne à faible vitesse, en particulier comme grand moteur Diesel à deux temps, l'arbre (5) qui est associé à l'hélice arrière (1) et qui comprend ledit embrayage (7) est couplé directement à une extrémité de l'arbre du moteur.

7. Système de propulsion selon l'une des revendications précédentes 1 à 5, **caractérisé par le fait que**, lorsque le moteur principal à combustion interne (4) est réalisé comme moteur à combustion interne à moyenne vitesse ou à grande vitesse, en particulier comme grand moteur Diesel à quatre temps, un réducteur de vitesse (6) est monté à la suite de celui-ci avec interposition dudit embrayage (7a), l'arbre (5) associé à l'hélice arrière (1) étant relié à entraînement à la sortie dudit réducteur de vitesse.

8. Système de propulsion selon l'une des revendications précédentes, **caractérisé par le fait que** l'alternateur de ligne d'arbre (18) est relié à entraînement via un multiplicateur de vitesse (17 ou bien 19) à l'arbre du moteur principal à combustion interne (3 ou bien 4).

9. Système de propulsion selon la revendication 8, **caractérise par le fait que** le multiplicateur de vitesse (17 ou bien 19) qui est associé à l'alternateur de ligne d'arbre (18) est relié à entraînement à un composant qui peut être entraîné par le moteur principal à combustion interne (3 ou bien 4) même lorsque l'embrayage (7 ou bien 7a) est débrayé.

10. Système de propulsion selon l'une des revendications précédentes, **caractérisé par le fait que** le moteur électrique (10) est couplé à l'entrée d'un réducteur de vitesse (12) monté à la suite dont la sortie agit de concert avec l'arbre (13) qui est associé à l'hélice avant (2).

11. Système de propulsion selon la revendication 10, **caractérisé par le fait qu'**un accouplement élastique (11) est disposé entre ledit moteur électrique (10) et le réducteur de vitesse (12) monté à la suite.

12. Système de propulsion selon la revendication 11, **caractérisé par le fait que** ledit accouplement élastique (11) est réalisé comme accouplement hydrodynamique.

13. Système de propulsion selon l'une des revendications précédentes, **caractérisé par le fait que** l'arbre (5) qui est associé à l'hélice arrière (1) est logé, avec une rallonge dépassant l'hélice (1), dans un palier d'appui (14a) qui est reçu dans un organe de support associé monté sur la coque de l'objet maritime.

14. Système de propulsion selon la revendication 13, **caractérisé par le fait que**, dans le cas d'un objet maritime ayant un gouvernail de type semi-suspendu (33) logé sur un talon de gouvernail (34), ledit palier d'appui (14a) est intégré dans le talon de gouvernail (34).

15. Système de propulsion selon l'une des revendications précédentes, **caractérisé par le fait qu'**un corps dirigeant le courant (30 ou bien 32) est associé au moins à l'extrémité arrière de l'arbre (5) associé à l'hélice arrière (1), ledit corps présentant de préférence une forme tronconique.

16. Système de propulsion selon l'une des revendications précédentes, **caractérisé par le fait que** la transition entre les moyeux des hélices (1, 2) est réalisée en tant que corps dirigeant le courant (31).

17. Système de propulsion selon l'une des revendications précédentes, **caractérisé par le fait que** des systèmes d'alimentation séparés l'un de l'autre sont associés au moteur principal à combustion interne (3 ou bien 4) et à chacun des groupes auxiliaires (20).

18. Système de propulsion selon l'une des revendications précédentes, **caractérisé par le fait que** la sortie de l'alternateur de ligne d'arbre (18) peut être reliée de telle façon au réseau électrique (22) situé à bord, que ledit réseau électrique (22) peut être alimenté en courant.

19. Système de propulsion selon l'une des revendications précédentes, **caractérisé par le fait qu'**un convertisseur de fréquence (24) est prévu dans la ligne entre l'alternateur de ligne d'arbre et le réseau électrique de bord (22).

20. Système de propulsion selon l'une des revendications précédentes, **caractérisé par le fait que**, lorsque les groupes auxiliaires (20) sont activés pour supporter le moteur principal à combustion interne (3 ou bien 4), un groupe auxiliaire (20) reste en position stand-by.

21. Système de propulsion selon l'une des revendications précédentes, **caractérisé par le fait que**, lorsque les groupes auxiliaires (20) sont activés pour supporter le moteur principal à combustion interne (3 ou bien 4), la puissance absorbée de l'alternateur de ligne d'arbre (18) que le moteur principal à combustion interne (3 ou bien 4) peut entraîner en sus est commandée de telle façon que l'alternateur de ligne d'arbre (18) n'absorbe que tant de puissance que l'on nécessite en sus pour la puissance des groupes auxiliaires (20) pour un rapport optimal entre les effets d'entraînement des deux hélices (1, 2).

22. Système de propulsion selon l'une des revendications précédentes, **caractérisé par le fait que** la puissance qui peut être absorbée par l'alternateur de ligne d'arbre (18) est comprise entre 20 et 30 % au maximum, de préférence elle est de 25 % de la puissance continue maximale du moteur principal à combustion interne (3, 4).
